# EUROPEAN PATENT APPLICATION

(11) **EP 3 026 268 A1**
(43) Date of publication of application: **01.06.2016**
(21) Application number: 15190645.0
(22) Date of filing: 20.10.2015
(51) Int. Cl.: F04D 17/16, F04D 29/30, F04D 29/28

(54) **FAN ASSEMBLY FOR CENTRIFUGAL BLOWER AND AIR CONDITIONING APPARATUS INCLUDING THE SAME**

(30) Priority: 27.11.2014 KR 20140167420
(71) Applicant: Samsung Electronics Co., Ltd., Gyeonggi-do 16677 (KR)
(72) Inventor: JANG, Keun-jeong, Gyeonggi-do (KR); KIM, Byung-ghun, Gyeonggi-do (KR); SEO, Yong-ho, Gyeonggi-do (KR); KWON, Hyung-jin, Gyeonggi-do (KR); KIM, Young-jae, Gyeonggi-do (KR); SEO, Hyeong-joon, Suwon-si (KR)
(74) Representative: Hewett, Jonathan Michael Richard

(57) **Abstract**

A fan assembly for a centrifugal blower and an air conditioning apparatus including the same are provided. The fan assembly for the centrifugal blower includes a first support configured to receive a driving force from a driving source to rotate, a plurality of blades having one end supported by the first support and arranged with an interval in a circumferential direction of the first support, and a second support configured to support the other end of the plurality of blades and including an air inlet formed therein, wherein the plurality of blades include a first portion disposed adjacent to the air inlet, and a second portion further from the air inlet than the first portion and having a wider width than the first portion, and at least one of the first and second portions has a constant width.

## Description

The present invention relates to a fan assembly for a centrifugal blower and an air conditioning apparatus including the same, and more particularly, to a fan assembly for a centrifugal blower, for reducing consumption power, and an air conditioning apparatus including the same.

In general, a fan for a centrifugal blower introduces air in a rotation axis direction, discharges air in a radial direction, and has a greater flow rate than other fans with the same size and rotational speed. In other words, since the fan for the centrifugal blower may have a lower external circumference or rotational speed than other fans in order to achieve the same flow rate, the fan for the centrifugal blower may be applied to a blower that requires a high flow rate with a small volume. In addition, the fan for the centrifugal blower is advantageous to increase the amount of air flow despite low rotation and to reduce noise.

When the fan for the centrifugal blower is rotated by a driving source, a pressure difference is generated between internal and external parts of the fan by a centrifugal force, and accordingly, air is discharged in a radial direction of the fan for the centrifugal blower.

In this case, since a flow path of air needs to be steeply changed with a great curvature in order to discharge air introduced into an inlet through a blade portion close to the inlet, the amount of air discharged through the blade portion close to the inlet is substantially smaller than the amount of air discharged through a blade portion far from the inlet. However, air introduced in a rotation axis direction collides with a shielding plate disposed at a connection portion with the driving source of the fan for the centrifugal blower to be lost prior to being introduced to the blade portion farthest from the inlet, and thus the amount of air discharged through the blade portion adjacent to the shielding plate is greater than the amount of air discharged through a blade portion closest to the inlet but is smaller than the amount of air discharged through an intermediate portion of a blade.

A conventional fan for a centrifugal blower does not consider this and uses a blade with a constant width irrespective of a distance from an inlet. The blade with this structure includes an area in which it is not necessary to discharge air, and thus a problem arises in that unnecessary power is consumed.

To overcome this problem, conventionally, a blade with a width that is gradually increased away from the inlet is proposed. However, the blade is conceived to discharge a greater amount of air but does not consider consumption power.

In addition, although a greatest amount of air is substantially discharged through an intermediate portion of a blade, only a fan with a width that is gradually increased away from an inlet is proposed, but amounts of air that is differently discharged according to portions of the overall blade are not considered. Accordingly, there is a need to develop a fan assembly for a centrifugal blower, for reducing consumption power as well as supplying a maximum air amount.

The present invention provides a fan assembly for a centrifugal blower, for reducing consumption power of the centrifugal blower to enhance efficiency by applying a blade including a plurality of portions with different widths.

According to an aspect of the present invention, a fan assembly for a centrifugal blower includes a first support configured to receive a driving force from a driving source to rotate, a plurality of blades having one end supported by the first support and arranged with an interval in a circumferential direction of the first support, and a second support configured to support the other end of the plurality of blades and including an air inlet formed therein, wherein the plurality of blades include a first portion disposed adjacent to the air inlet, and a second portion further from the air inlet than the first portion and having a wider width than the first portion, and at least one of the first and second portions has a constant width.

Any one of the first and second portions may be gradually or non-gradually tapered towards the air inlet.

A length of the first portion may be equal to or smaller than a length of the second portion.

The second portion may more protrude towards an inner side of the fan assembly than the first portion.

A portion of an internally protruding portion of the second portion, adjacent to the first portion, may be rounded.

The second portion may further include an extension portion disposed adjacent to the first support and extending towards a rotation center of the first support.

Each of the plurality of blades may be curved in a direction from an external side to an internal side of the first support.

Each of the plurality of blades may further include a third portion between the first portion and the second portion, and the third portion may be wider than a width of the first portion and may be narrower than a width of the second portion.

A length of the third portion may be equal to or greater than the sum of the first and second portions.

The third portion may include a plurality of sections with different widths, and the plurality of sections may have a width tapered towards the air inlet.

The third portion may have a constant width or a width tapered towards the air inlet.

According to another aspect of the present invention, a fan assembly for a centrifugal blower includes a first support configured to receive a driving force from a driving source to rotate, a plurality of blades having one end supported by the first support and arranged with an interval in a circumferential direction of the first support, and a second support configured to support the other end of the plurality of blades and including an air inlet formed therein, wherein the plurality of blades include a first portion disposed adjacent to the air inlet and tapered towards the air inlet, and a second portion further from the air inlet than the first portion and having a wider width than the first portion.

A length of the first portion may be equal to or smaller than a length of the second portion.

The second portion may more protrude towards a rotation center of the first support than the first portion.

The second portion may further include an extension portion disposed adjacent to the first support and extending towards a rotation center of the first support.

Each of the plurality of blades may be curved in a direction to an internal side to an external side of the first support.

According to another aspect of the present invention, an air conditioning apparatus includes a housing including a suction port and a discharge port of air, formed therein, a heat exchanger disposed on an air path of the air, formed in the housing, and a centrifugal blower disposed in the housing and including a fan assembly for discharging air introduced through the suction port to the discharge port, wherein the fan assembly includes a plurality of blades including a first portion disposed adjacent to the suction port and a second portion further from the suction port than the first portion and having a wider width than the first portion, and at least one of the first and second portions has a constant width.

Any one of the first and second portions may be gradually or non-gradually tapered towards the suction port.

A length of the first portion may be equal to or smaller than a length of the second portion.

Each of the plurality of blades may further include a third portion between the first portion and the second portion, and the third portion may be wider than a width of the first portion and may be narrower than a width of the second portion.

According to an aspect of the present invention, a fan assembly for a centrifugal blower that is configured to move air in an air conditioner is described. The fan assembly may include a first circular support member, a second circular support member, and a plurality of blades each having a first end fixed to the first circular support member and a second end fixed to the second circular support member. Each of the plurality of blades may be comprised of a first length portion having a first width and a second length portion having a second width.

According to an aspect of the present invention, an air conditioner is described. The air conditioner may include a housing comprising an air suction port and an air discharge port formed therein, a centrifugal blower disposed within the housing, and a fan assembly, disposed within the centrifugal blower, to move air introduced through the suction port to the discharge port of the housing. The fan assembly may include a first circular support member, a second circular support member, and a plurality of blades each having a first end fixed to the first circular support member and a second end fixed to the second circular support member. Each of the plurality of blades may be comprised of a first length portion having a first width and a second length portion having a second width.

The above and/or other aspects of the present invention will be more apparent by describing certain exemplary embodiments of the present disclosure with reference to the accompanying drawings, in which:
FIG. 1 is a schematic diagram illustrating an air conditioning apparatus according to an embodiment of the present invention;
FIG. 2 is a perspective view of a fan assembly for a centrifugal blower of an air conditioning apparatus according to an embodiment of the present invention;
FIG. 3 is a plan view of a blade of the fan assembly for the centrifugal blower illustrated in FIG. 2; and
FIGS. 4 to 9 are diagrams illustrating embodiments modified the blade illustrated in FIG. 3 in various ways.

In the following description of the present invention, a detailed description of known functions and configurations incorporated herein will be omitted when it may make the subject matter of the present invention unclear. For the purposes of promoting an understanding of the present disclosure, some elements in the following drawings may be exaggerated instead of using a real scale.

Here, an air conditioning apparatus 1 according to embodiments of the present invention will be described with reference to the attached drawings and a fan assembly 301 for a centrifugal blower will be mainly described in detail.

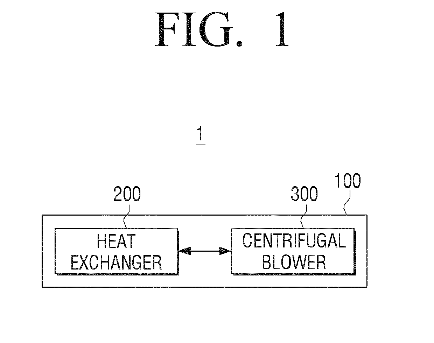

Referring to FIG. 1, the air conditioning apparatus 1 according to an embodiment of the present invention includes a housing 100, a heat exchanger 200, and a centrifugal blower 300 in order to heat and cool indoors by introducing air from outdoors or indoors and then exchanging heat.

The housing 100 forms an outer appearance of the air conditioning apparatus 1 and includes a suction port (not shown) for introducing air from outdoors or indoors and a discharge port (not shown) for exchanging heat with the introduced air and then discharging the air to indoors. In addition, the housing 100 protects the heat exchanger 200, the centrifugal blower 300, and other electronic components (not shown), which are disposed in the housing 100, from outside.

The heat exchanger 200 is disposed on an air path from the suction port formed in the housing 100 to the discharge port and exchanges heat with air passing through the heat exchanger 200. That is, the heat exchanger 200 absorbs air in order to cool the indoors and discharges heat in order to heat the indoors. The heat exchanger 200 may form a temperature difference from air via circulation of a refrigerant to exchange heat with air.

The aforementioned housing 100 and heat exchanger 200 are applied to a general air conditioning apparatus and a detailed description of components will be omitted.

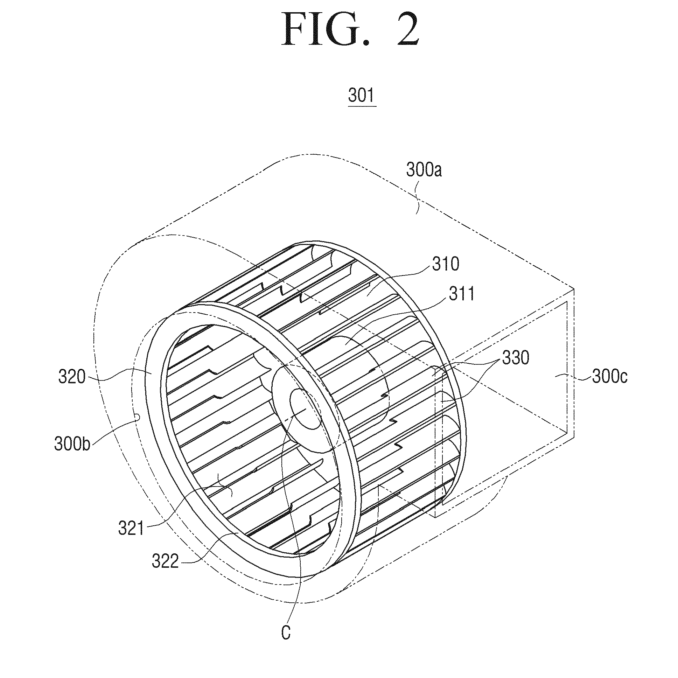

Referring to FIG. 2, the centrifugal blower 300 is disposed on an air path formed in the housing 100 and includes a case 300a, the fan assembly 301 for a centrifugal blower (hereinafter, referred to as the 'fan assembly 301'), and a driving source (not shown) disposed outside the case 300a and providing a rotational force to the fan assembly 301.

The centrifugal blower 300 may be any one of a multi-blade fan, a turbo fan, and a plate fan.

The case 300a includes the fan assembly 301 disposed therein so as to be rotatable and includes an entrance 300b for introducing air into the case 300a and an outlet 300c for discharging air out of the case 300a, which are formed in one surface of the case 300a.

The driving source is connected to the fan assembly 301 and rotationally drives the fan assembly 301. A variety of types of motors may be used as the motor.

The fan assembly 301 includes a first support 310, a second support 320, and a plurality of blades 330. The fan assembly 301 receives a driving force from the driving source to rotate in one direction, introduces air introduced into a suction port of the housing 100 in a direction approximately parallel to a rotation center C through an inlet 321, and discharges the air in a radial direction approximately perpendicular to the rotation center C through the plurality of blades 330.

The first support 310 is formed as an approximately circular plate and supports one end of the plurality of blades 330. The first support 310 includes a coupling portion 311 integrated with a central portion thereof and connected to the driving source. The coupling portion 311 is coupled to a rotation axis (not shown) of the driving source and receives a driving force directly from the driving source.

The second support 320 is formed as an approximately ring shape and supports the other end of the plurality of blades 330 along an inner side of the second support 320. In addition, the second support 320 includes the inlet 321 formed in a central portion thereof and connected to the entrance 300b of the case 300a. The second support 320 may be formed in such a way that an internal surface 322 thereof that contacts air flow has a predetermined curvature so as to smoothly discharge air, introduced into the fan assembly 301 through the inlet 321, through the plurality of blades 330.

The plurality of blades 330 may be arranged at a predetermined interval in a circumferential direction of the first support 310 and may have one end fixed to the first support 310 and the other end fixed to the second support 320. The plurality of blades 330 generates a pressure difference between internal and external parts of the case 300a by a centrifugal force to introduce air in a direction approximately parallel to the rotation center C and to discharge the air in a radial direction approximately perpendicular to the rotation center C. In this case, the air discharged out of the fan assembly 301 is discharged out of the case 300a through the outlet 300c of the case 300a and is finally discharged out of the air conditioning apparatus 1 through an air discharge port (not shown) of the housing 100.

In the case of a multi-blade fan and a turbo fan, the plurality of blades 330 may be curved in a direction from an external side to an internal side of the second support 320, and in the case of a plate fan, the plurality of blades 330 may be horizontally formed. In addition, in the case of a multi-blade fan, an external end of the plurality of blades 330 may be disposed towards a rotation direction, and in the case of a turbo fan, the external end of the plurality of blades 330 may be disposed towards an opposite direction to the rotation direction.

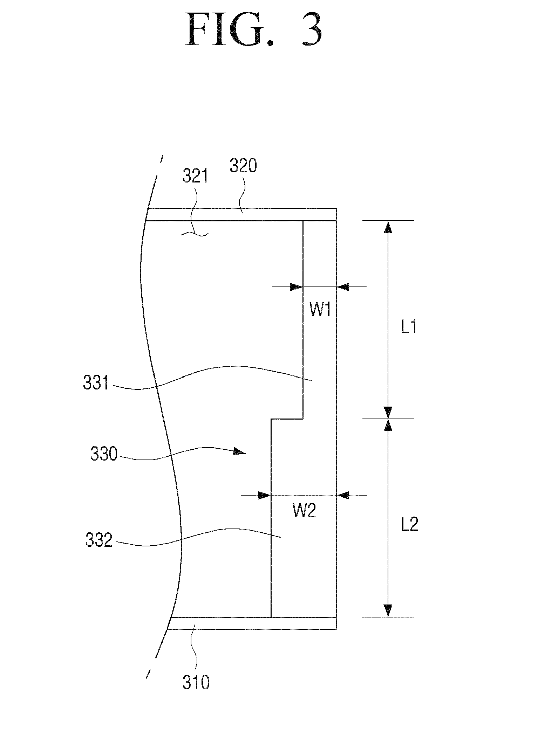

Referring to FIG. 3, a blade 330 according to a first embodiment of the present invention is divided into a first portion 331 and a second portion 332 which have different widths according to the amount of air that is introduced through the inlet 321 and discharged in a radial direction of the fan assembly 301.

The first portion 331 is disposed adjacent to the inlet 321 and formed with a narrow and fixed or constant width W1 compared with a width W2 of the second portion 332, which in the embodiment also has a fixed or constant width W2.

In detail, in order to discharge the air introduced through the inlet 321, through the first portion 331 in the radial direction, a flow path of the air needs to be steeply changed to the radial direction immediately after the air passes through the inlet 321, and thus the amount of air discharged through the first portion 331 is smaller than the amount of air discharged through the second portion 332. Accordingly, the first portion 331 need not necessarily have a wide width for suction of a large amount of air, and thus needs to be formed with the smaller width W1 than the width W2 of the second portion 332.

On the other hand, the second portion 332 is disposed adjacent to the first support 310, which is further from the inlet 321 than the first portion 331. The second portion 332 is formed with the wider and constant width W2 than the first portion 331. In detail, a larger amount of air introduced through the inlet 321 passes through the second portion 332 than the first portion 331, the second portion 332 is formed with the wider width W2 than the width W1 of the first portion 331.

In this case, the second portion 332 may be disposed to protrude more towards an inner side of the fan assembly 301 than the first portion 331 so as to bring a large amount of air introduced through the inlet 321.

In addition, a length L1 of the first portion 331 and a length L2 of the second portion 332 may be the same, as illustrated in FIG. 3. However, embodiments of the present invention are not limited thereto, and the length L1 of the first portion 331 may be smaller than the length L2 of the second portion 332.

In detail, the amount of air discharged through a section (a section in a direction towards the first support 310 from the second support 320) between about 30% to 80% of the blade 330 from the second support 320 is greatest, and thus in consideration of this, the length L1 of the first portion 331 may be formed with about 30% of the length of the blade 330 and the length L2 of the second portion 332 may be formed with about 70% as the remaining length of the blade 330.

Hereinafter, a blast process using the fan assembly 301 of the centrifugal blower 300 configured above will be described.

Referring to FIGS. 2 and 3, a flow direction of air that is sequentially introduced into the entrance 300b of the case 300a and the inlet 321 of the fan assembly 301 is changed towards the plurality of blades 330 with a predetermined curvature. In this case, the amount of air directed towards the first portion 331 of the blade 330 is relatively small and the amount of air directed toward the second portion 332 of the blade 330 is relatively large.

In this case, the blade 330 may be formed in such a way that the width W1 of the first portion 331 with a relatively small amount of air introduced thereto is smaller than the width W2 of the second portion 332 with a relatively large amount of air introduced thereto so as to omit an unnecessary portion of the blade 330 for discharging air, thereby reducing power consumed to rotate the unnecessary portion from whole consumption power for rotation of the fan assembly 301. Accordingly, the fan assembly 301 may reduce consumption power compared with in a case in which a blade that unnecessarily has a wide width is driven.

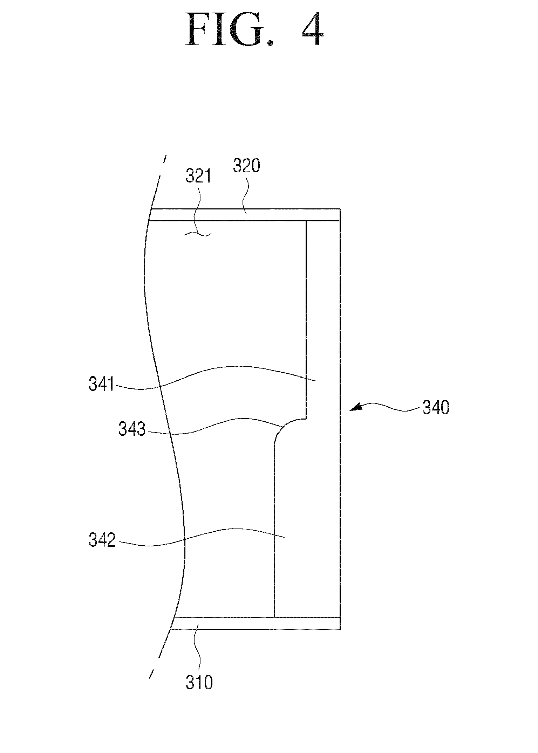

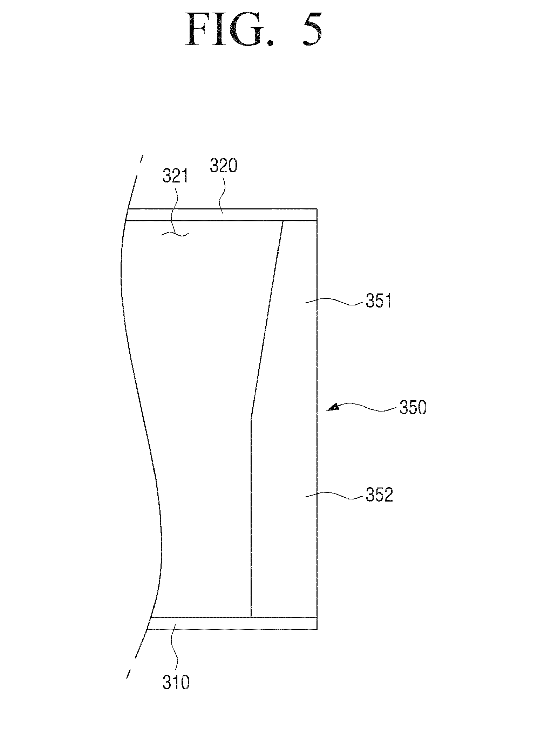

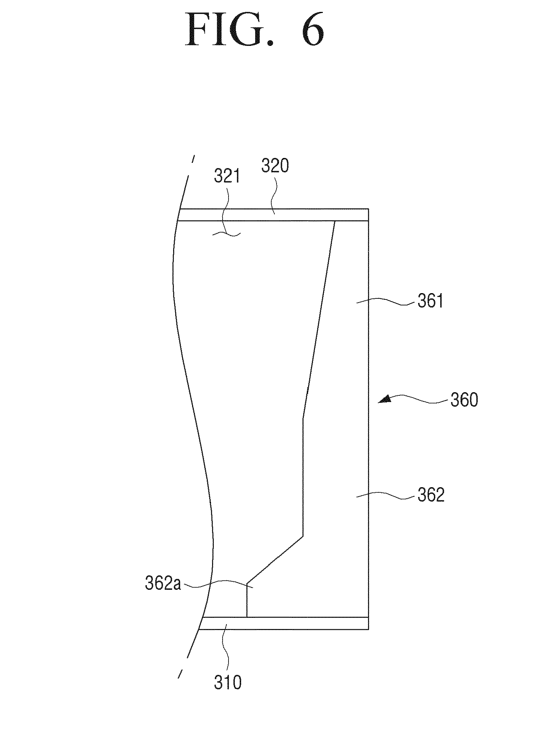

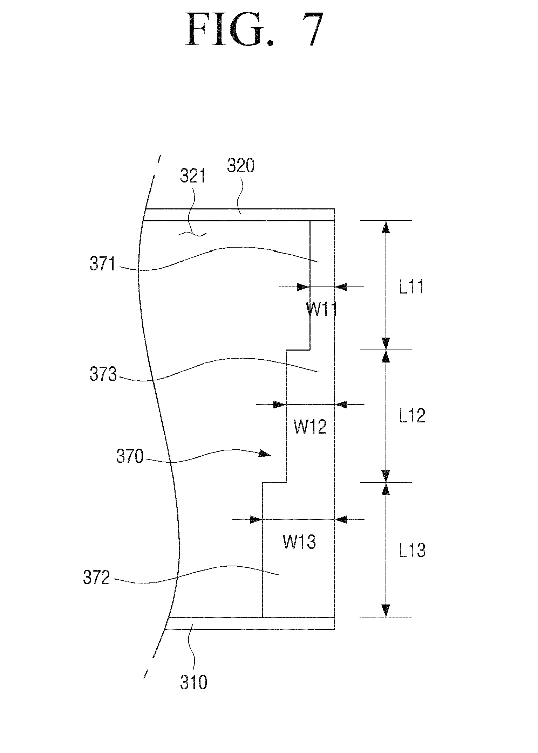

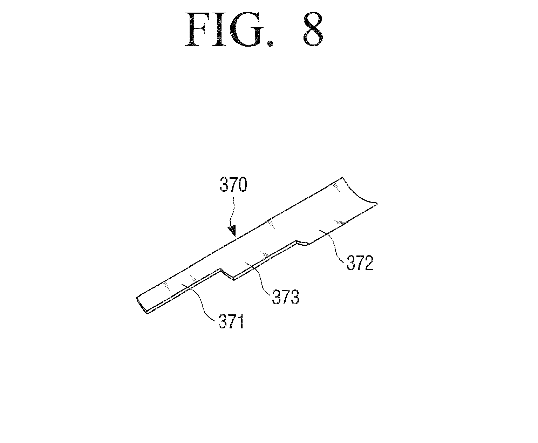

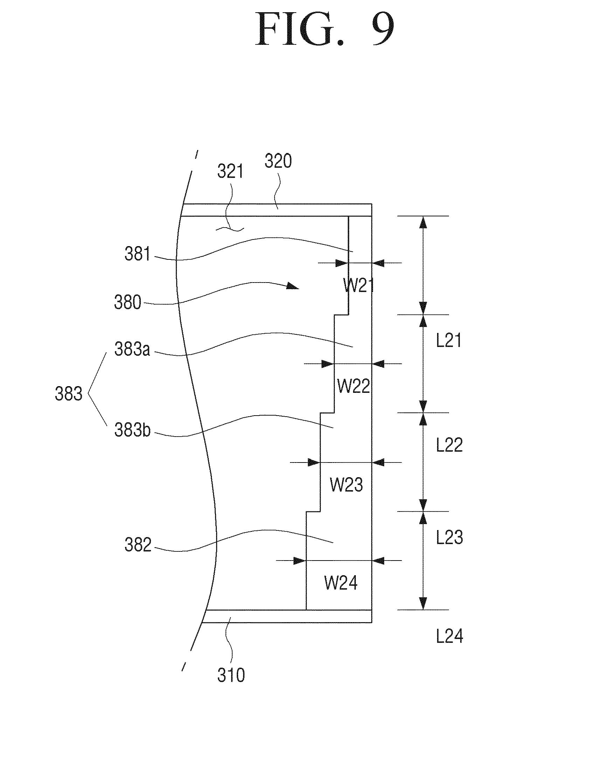

Hereinafter, modified embodiments in various forms of the aforementioned blade 330 will be sequentially described with reference to FIGS. 4 to 9. For convenience of description, the aforementioned blade 330 illustrated in FIG. 3 is defined as a first embodiment, a blade 340 illustrated in FIG. 4 is defined as a second embodiment, a blade 350 illustrated in FIG.5 is defined as a third embodiment, a blade 360 illustrated in FIG. 6 is defined as a fourth embodiment, a blade 370 illustrated in FIGS. 7 and 8 is defined as a fifth embodiment, and a blade 380 illustrated in FIG. 9 is defined as a sixth embodiment.

In addition, the first support 310 and the second support 320 that are commonly illustrated for description of blades of the following second to sixth embodiments are the same as in the aforementioned first embodiment of the present invention, and thus a detailed description thereof will be omitted herein.

Referring to FIG. 4, the blade 340 according to the second embodiment is formed in such a way that a portion 343 of an internally protruding portion of a second portion 342, adjacent to a first portion 341, is rounded. That is, the blade 340 is formed such that a width between the first portion 341 and the second portion 342 is not steeply changed, that is, the width is changed gradually.

Although not illustrated, a portion of an internally protruding portion of the first portion 341, adjacent to the second portion 342, may also be rounded.

Like in the first embodiment, the length of the first portion 341 is smaller than the length of the second portion 342.

When the blade 340 according to the second embodiment of the present invention is applied to the fan assembly 301, a flow direction of air introduced into the inlet 321 is changed towards the plurality of blades 340 with a predetermined curvature, like the blade 330 according to the first embodiment. In this case, as described above, the amounts of air directed towards the first portion 341 and the second portion 342 are different.

In this case, the blade 340 is configured in such a way that a portion of an internally protruding portion of the second portion 342, adjacent to the first portion 341, is rounded, thereby preventing the amount of discharged air from being reduced due to fluid turbulence generated while air passes through the portion 343 of the internally protruding portion of the second portion 342, adjacent to the first portion 341, compared with in a case in which the portion of the internally protruding portion of the second portion 342 is angularly formed.

With reference to FIG. 5, the blade 350 according to the third embodiment will be described.

The blade 350 according to the third embodiment is formed in such a way that the width of a first portion 351 is tapered towards the inlet 321. However, although the width of the first portion 351 is gradually tapered in FIG. 5, embodiments of the present invention are not limited thereto, and the width of the first portion 351 may be non-gradually tapered. In addition, the first portion 351 may have a constant width, but a second portion 352 may have a width that is gradually or non-gradually tapered towards the inlet 321.

In addition, like the aforementioned blade 330 according to the first embodiment, the length of the first portion 351 may be smaller than the length of the second portion 352.

When the blade 350 according to the third embodiment is applied to the fan assembly 301, a flow direction of air introduced to the inlet 321 is changed towards the plurality of blades 350 with a predetermined curvature like the aforementioned blade 330 according to the first embodiment. In this case, the amount of air introduced to the first portion 351 is increased away from the inlet 321, and correspondingly the width of the first portion 351 is increased away from the inlet 321. That is, the blade 350 according to the third embodiment may reflect the amount of discharged air, which is changed away from the inlet 321, in more detail than the blade 330 according to the first embodiment so as to minimize consumption power, thereby reducing the amount of lost air due to fluid turbulence to increase the amount of discharged air.

The blade 360 according to the fourth embodiment will be described with reference to FIG. 6.

The blade 360 according to the fourth embodiment includes an extension portion 362a formed at a second portion 362. In detail, the extension portion 362a is formed at a portion of the second portion 362, adjacent to the first support 310, and extends towards an internal side of the fan assembly 301 for a centrifugal blower.

Although FIG. 6 illustrates the case in which the width of a section of the extension portion 362a, close to the inlet 321, is increased away from the inlet 321, and the width of a section of the extension portion 362a, far from the inlet 321, is constant, the extension portion 362a may be formed with only a section with a width that is gradually or non-gradually increased away from the inlet 321.

When the blade 360 according to the fourth embodiment is applied to the fan assembly 301, a flow direction of introduced air is changed towards the plurality of blades 360 with a predetermined curvature like the aforementioned blades 330, 340, and 350 according to the first to third embodiments. In this case, the blade 360 according to the fourth embodiment is formed in such a way that the extension portion 362a is formed at the second portion 362 so as to further bring air that collides with the first support 310 to be lost prior to the collision. Accordingly, lost air at a portion of the blade 360, adjacent to the first support 310, may be further discharged, thereby enhancing efficiency of the centrifugal blower 300.

The blade 370 according to the fifth embodiment will be described with reference to FIGS. 7 and 8.

The blade 370 according to the fifth embodiment may include a third portion 373 disposed between a first portion 371 and a second portion 372. A width W13 of the third portion 373 is smaller than a width W11 of the first portion 371 and is wider than a width W12 of the second portion 372. That is, the blade 370 is formed with a portion, a width of which is increased away from the inlet 321.

In addition, like the aforementioned blades 330, 340, 350, and 360 according to the first to fourth embodiments, the width of the blade 370 may be gradually or non-gradually increased away from the inlet 321.

In addition, although FIG. 7 illustrates the case in which a length L11 of the first portion 371, a length L12 of the second portion 372, and a length L13 of the third portion 373 are the same, embodiments of the present invention are not limited thereto, and the sum of the length L11 of the first portion 371 and the length L12 of the second portion 372 may be equal to or smaller than the length L13 of the third portion 373.

In detail, the first portion 371 may be formed at a portion from the inlet 321 up to about 30% of the blade 370, in which a relatively small amount of air passes, the third portion 373 may be formed at a portion from the inlet 321 up to a portion between about 30% and about 80% of the blade 370, in which a relatively large amount of air passes, and the second portion 372 may be formed at a portion from the inlet 321 to a portion after about 80% of the blade 370, in which introduced air collides with the first support 310 and is partially lost.

When the blade 370 according to the fifth embodiment is applied to the fan assembly 301, a flow direction of introduced air is changed towards the plurality of blades 370 with a predetermined curvature like in the aforementioned embodiments.

In this case, the blade 370 according to the fifth embodiment includes the first portion 371 for drawing and discharging a smallest amount of air introduced through the inlet 321, the third portion 373 for drawing and discharging a largest amount of air, and the second portion 372 for drawing and discharging some of air lost by the first support 310. Accordingly, air is discharged such that a smallest amount of air is discharged through the first portion 371 and a largest amount of air is discharged through the third portion 373. In addition, the second portion 372 may discharge a larger amount of air than in the blades 330, 340, 350, and 360 according to the aforementioned first to fourth embodiments.

That is, the blade 370 according to the fifth embodiment is configured in such a way that the first portion 371 for discharging a small amount of air introduced from the inlet 321 is formed with a narrow width to reduce unnecessary power consumption and the second portion 372 in which air introduced from the inlet 321 collides with the first support 310 and is lost to reduce a flow rate is formed with a wide width to reduce lost air, thereby enhancing overall efficiency of the centrifugal blower 300.

With reference to FIG. 9, the blade 380 according to the sixth embodiment will be described.

The blade 380 according to the sixth embodiment is formed in such a way that a third portion 383 includes a plurality of sections 383a and 383b with different widths. Although FIG. 9 illustrates the case in which the blade 380 includes two sections, embodiments of the present invention are not limited thereto, and the blade 380 may include two or more sections.

In addition, a section that is further from an inlet among the plurality of sections 383a and 383b may have a wider width. Accordingly, in FIG. 9, a width W23 of a second section 383b is greater than a width W22 of a first section 383a. In this case, like in the aforementioned embodiments, each width of the plurality of sections 383a and 383b may be greater than a width W21 of a first portion 381 and smaller than a width W24 of a second portion 382.

Like in the aforementioned embodiments, a width of each portion may be gradually or non-gradually increased away from the inlet 321.

In addition, although FIG. 9 illustrates the case in which a length L21 of the first portion 381, a length L22 of the second portion 382, a length L23 of the first section 383a, and a length L24 of the second section 383b are equal to each other, embodiments of the present invention are not limited thereto, and the length (the sum of L22 and L23) of the third portion 383 may be equal to or greater than the sum of the length L21 of the first portion 381 and the length L24 of the second portion 382. This reflects the features in that the amount of discharged air is varied according to the length of the blade 380. In addition, although the length L22 of the first section 383a and the length L23 of the second section 383b are also equal to each other, the length L22 and the length L23 may be different.

When the blade 380 according to the sixth embodiment is applied to the fan assembly 301, a flow direction of air introduced to the fan assembly 301 is changed towards the plurality of blades 380 with a predetermined curvature. Then air is discharged in such a way a largest amount of air is discharged in the first section 383a and the second section 383b, a next largest amount of air is discharged in the second portion 382, and a smallest amount of air is discharged in the first portion 381.

In this case, the blade 380 according to the sixth embodiment is configured in such a way that the third portion 383 for drawing and discharging a largest amount of air introduced through the inlet 321 is divided into the first section 383a and the second section 383b, thereby optimizing the amount of discharged air based on consumption power.

The blades 370 and 380 according to the aforementioned embodiments include portions with a constant width, and thus advantageously may be easily manufactured compared with the case in which a blade includes a portion with a changeable width.

Like the blades 330, 340, 350, 360, 370, and 380 according to the aforementioned first to sixth embodiments, a blade may be manufactured whereby the blade is configured to be divided into a plurality of portions with different widths in consideration of different amounts of discharged air according to the length of the blade, thereby reducing consumption power to enhance overall efficiency of a centrifugal blower.

The foregoing exemplary embodiments and advantages are merely exemplary and are not to be construed as limiting the present invention. Also, the description of the exemplary embodiments of the present invention is intended to be illustrative, and not to limit the scope of the claims, and many alternatives, modifications, and variations will be apparent to those skilled in the art.

## Claims

1. A fan assembly for a centrifugal blower, comprising:
a first support configured to receive a driving force from a driving source to rotate;
a plurality of blades having one end supported by the first support and arranged with an interval in a circumferential direction of the first support; and
a second support configured to support the other end of the plurality of blades and comprising an air inlet formed therein,
wherein:
the plurality of blades each comprise a first portion disposed adjacent to the air inlet, and a second portion further from the air inlet than the first portion and having a wider width than the first portion; and
at least one of the first and second portions has a constant width.

2. The fan assembly for the centrifugal blower as claimed in claim 1, wherein any one of the first and second portions is gradually or non-gradually tapered towards the air inlet.

3. The fan assembly for the centrifugal blower as claimed in claim 1 or claim 2, wherein a length of the first portion is equal to or smaller than a length of the second portion.

4. The fan assembly for the centrifugal blower as claimed in any one of the preceding claims, wherein the second portion protrudes more towards an inner side of the fan assembly than the first portion.

5. The fan assembly for the centrifugal blower as claimed in claim 4, wherein a portion of an internally protruding portion of the second portion, adjacent to the first portion, is rounded.

6. The fan assembly for the centrifugal blower as claimed in any one of the preceding claims, wherein the second portion further comprises an extension portion disposed adjacent to the first support and extending towards a rotation center of the first support.

7. The fan assembly for the centrifugal blower as claimed in any one of the preceding claims, wherein each of the plurality of blades is curved in a direction from an external side to an internal side of the first support.

8. The fan assembly for the centrifugal blower as claimed in any one of the preceding claims, wherein:
each of the plurality of blades further comprises a third portion between the first portion and the second portion; and
the third portion is wider than a width of the first portion and is narrower than a width of the second portion.

9. The fan assembly for the centrifugal blower as claimed in claim 8, wherein a length of the third portion is equal to or greater than the sum of the first and second portions.

10. The fan assembly for the centrifugal blower as claimed in claim 8, wherein:
the third portion comprises a plurality of sections with different widths; and
the plurality of sections have a width tapered towards the air inlet.

11. The fan assembly for the centrifugal blower as claimed in claim 8, wherein the third portion has a constant width or a width tapered towards the air inlet.

12. An air conditioning apparatus comprising:
a housing comprising a suction port and a discharge port of air, formed therein;
a heat exchanger disposed on an air path of the air, formed in the housing; and
a centrifugal blower disposed in the housing and comprising a fan assembly for discharging air introduced through the suction port to the discharge port,
wherein the fan assembly comprises a plurality of blades each comprising a first portion disposed adjacent to the suction port and a second portion further from the suction port than the first portion and having a wider width than the first portion, and at least one of the first and second portions has a constant width.

13. The air conditioning apparatus as claimed in claim 12, wherein any one of the first and second portions is gradually or non-gradually tapered towards the suction port.

14. The air conditioning apparatus as claimed in claim 12 or claim 13, wherein a length of the first portion is equal to or smaller than a length of the second portion.

15. The air conditioning apparatus as claimed in any one of claims 12 to 14, wherein:
each of the plurality of blades further comprises a third portion between the first portion and the second portion; and
the third portion is wider than a width of the first portion and is narrower than a width of the second portion.
